# EUROPEAN PATENT APPLICATION

(11) **EP 3 483 792 A1**
(43) Date of publication of application: **15.05.2019**
(21) Application number: 17275183.6
(22) Date of filing: 10.11.2017
(51) Int. Cl.: G06N 3/04, G06N 7/00

(54) **USER BEHAVIOUR MONITORING**

(71) Applicant: Nokia Technologies Oy, 02610 Espoo (FI)
(72) Inventor: Bhattacharya, Sourav, Cambridge, CB3 0FA (GB); Lane, Nicholas D., Cambridge, CB3 0FA (GB); Velickovic, Petar, Cambridge, CB3 0FA (GB); Fahim, Kawsar, Cambridge, CB3 0FA (GB)
(74) Representative: Whiting, Gary

(57) **Abstract**

A method and apparatus is described comprising: receiving first user data of a first user from a plurality of data sources; inferring at least some missing data points in said first user data using a model to predict the missing data points, wherein the model is trained using selected data extracted from stored data relating to a plurality of users; generating modified user data from said first user data and at least some of said inferred missing data points; and converting said modified user data into a plurality of representations having defined length sequences for each data source.

## Description

### Field

The present specification relates to monitoring user behaviours, for example monitoring user behaviours based on multiple data sources.

### Background

Software applications that model user data, such as behaviours (e.g., mobility patterns), internal states (e.g., stress levels) and physical activities (e.g., step counts) are known. Application areas that make use of such user data include (but are not limited to) healthcare, productivity, safety, digital assistants and games.

User data for such models may, for example, be obtained from devices specific to a user, such as an in-ear wearable apparatus, a sensor-collecting phone application or a networked light switch in a user's home. As the number and type of data sources increases, it becomes increasingly challenging to make use of such user data effectively and efficiently.

### Summary

In a first aspect, this specification describes a method comprising: receiving first user data of a first user from a plurality of data sources; inferring at least some missing data points in said first user data using one or more models to predict the missing data points, wherein the models are trained using selected data extracted from stored data relating to a plurality of users; generating modified user data from said first user data and at least some of said inferred missing data points; and converting said modified user data into a plurality of representations having defined length sequences for each data source.

The selected data may be selected in order to provide data from similar data sources to data sources that have missing data points. Alternatively, or in addition, the selected data may be selected to provide data from selected ones of the plurality of users that are similar to the first user. Furthermore, similar users maybe identified by comparing demographic data of the first user with demographic data of the plurality of users.

In the first aspect, the one or more models used to predict the missing data points may be multi-modal models. Alternatively, or in addition, the one or more models used to predict the missing data points may be implemented using one or more neural networks.

In the first aspect, converting said modified user data may comprise extracting arbitrary data sequences from data sequences extracted from the modified user data and converting said arbitrary data sequences into representations having said defined length sequences for each data source.

The first aspect may further comprise using a neural network for each data source to define the length of the defined length sequence for the respective data source.

In the first aspect, the plurality of data sources may include one or more sensors.

The first aspect may further comprise processing the converted modified user data having defined length sequences using a neural network. The method may further comprise processing the converted modified user data using the neural network to make predictions on the basis of said converted modified user data.

In a second aspect, this specification describes an apparatus configured to perform any method as described with reference to the first aspect.

In a third aspect, this specification describes computer-readable instructions which, when executed by computing apparatus, cause the computing apparatus to perform any method as described with reference to the first aspect.

In a fourth aspect, this specification describes a computer-readable medium having computer-readable code stored thereon, the computer readable code, when executed by at least one processor, causes performance of: receiving first user data of a first user from a plurality of data sources; inferring at least some missing data points in said first user data using one or more models to predict the missing data points, wherein the models are trained using selected data extracted from stored data relating to a plurality of users; generating modified user data from said first user data and at least some of said inferred missing data points; and converting said modified user data into a plurality of representations having defined length sequences for each data source.

In a fifth aspect, this specification describes an apparatus comprising: at least one processor; and at least one memory including computer program code which, when executed by the at least one processor, causes the apparatus to: receive first user data of a first user from a plurality of data sources; infer at least some missing data points in said first user data using one or more models to predict the missing data points, wherein the models are trained using selected data extracted from stored data relating to a plurality of users; generate modified user data from said first user data and at least some of said inferred missing data points; and convert said modified user data into a plurality of representations having defined length sequences for each data source.

In a sixth aspect, this specification describes an apparatus comprising: means for receiving first user data of a first user from a plurality of data sources; means for inferring at least some missing data points in said first user data using one or more models to predict the missing data points, wherein the models are trained using selected data extracted from stored data relating to a plurality of users; means for generating modified user data from said first user data and at least some of said inferred missing data points; and means for converting said modified user data into a plurality of representations having defined length sequences for each data source.

### Brief description of the drawings

Example embodiments will now be described, by way of non-limited examples, with reference to the following schematic drawings, in which:
Figure 1 shows a first user behaviour model;
Figure 2 shows a second user behaviour model;
Figure 3 is a flow chart showing an algorithm in accordance with an exemplary embodiment;
Figure 4 shows user behaviour monitoring system in accordance with an exemplary embodiment;
Figure 5 is a flow chart showing an algorithm in accordance with an exemplary embodiment;
Figure 6 is a flow chart showing an algorithm in accordance with an exemplary embodiment;
Figure 7 is a block diagram of a system according to an example embodiment; and
Figures 8a and 8b show tangible media, respectively a removable memory unit and a compact disc (CD) storing computer-readable code which when run by a computer perform operations according to embodiments.

### Detailed description

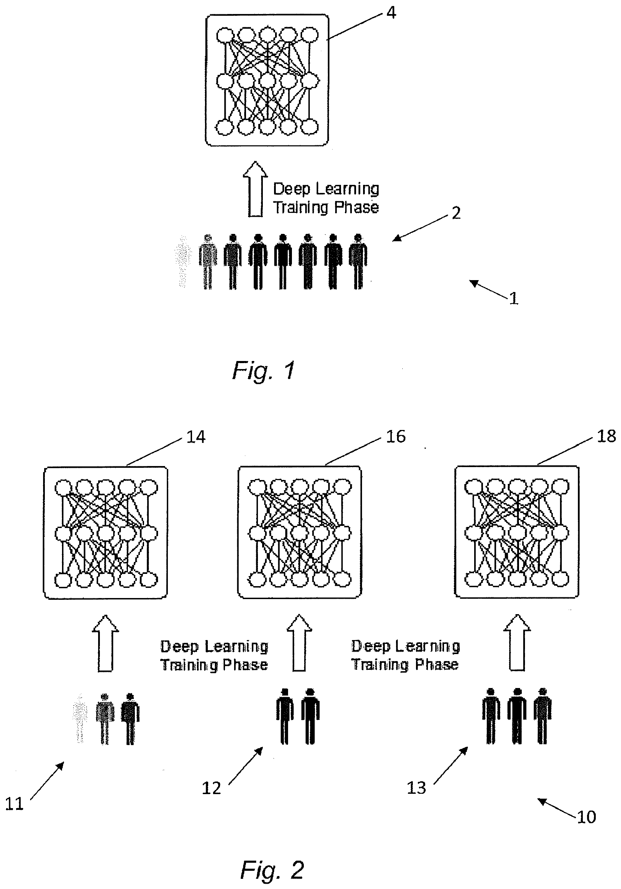

Figure 1 shows a first user behaviour model, indicated generally by the reference numeral 1. The model 1 includes a population 2 and a neural network 4. The population 2 consists of very many users, which users provide user data to the neural network 4. The user data provided to the neural network 4 could take many forms, such as behaviour, internal states and activities. The data is collected for many different users, from many different devices and under many different conditions. Such data is aggregated and the neural network 4 seeks to draw conclusions from the data.

The neural network 4 seeks to use the user data provided by the population of users 2 to perform functions such as recognising and predicting user behaviours, internal states and physical activities. Although relatively simple, the wide variety of data provided to the model 1 makes generalizations difficult.

Figure 2 shows a second user behaviour model, indicated generally by the reference numeral 10. The model 10 includes a first population 11, a second population 12, a third population 13, a first neural network 14, a second neural network 16 and a third neural network 18. The first population 11 provides user data to the first neural network 14. Similarly, the second population 12 provides user data to the second neural network 16 and the third population 13 provides user data to the third neural network 18. As in the model 1, the user data provided to the neural networks 14, 16 and 18 can take many forms, such as behaviour, internal states and activities. Importantly, the populations 11 to 13 are organised so that they share characteristics. For example, the populations may be organised by age, or by gender.

Thus, the data received by the neural networks 14 to 18 is grouped based on some attributes. For example, data from elderly people captured in the home may be clustered in a single dataset and kept in isolation from others. The granularity of these groupings can be controlled to balance the purity (e.g., how many distinct characteristics are merged) of the situation and the amount of data fragmentation that occurs (in some situations it is better to have larger datasets rather than purer datasets).

The second model 10 is generally more robust than the first model 1. A problem with the second model 10 is that, as the number of populations increases, the total amount of data required to allow each of the neural networks to process the user data to provide meaningful and useful outputs is significant. Data is costly to collect and the neural networks are costly to train.

The users within the populations 2, 11, 12 and 13 described above may each be able to provide multiple sources of data. Combining multiple data points for each user can lead to very powerful predictive modelling of user characteristics (such as health characteristics). However, there are many practical problems that prevent the simple models 1 and 10 from delivering such advantages.

Each data source typically presents a different collection of sensor modalities that are not trivially compatible with each other. For example, a mobile communication device might have a microphone and a movement tracker, a light switch might only have the binary state of on and off and an in-ear wearable device may be able to generate a plurality of data sets measuring different physiological profiles, e.g., stress and blood-pressure. Ideally, information from these devices should be integrated together towards building the best model of desired user-related information.

Each user typically has a different mixture of devices providing different combinations of user data. Some users may have only a single device; others will have number of devices. Regardless of a particular combination of devices owned by the user, the relevant model should still remain robust and generalizable, even if only a few people in a training dataset own an identical configuration. Thus, there is a risk of fragmenting the dataset into incompatible subgroups of data.

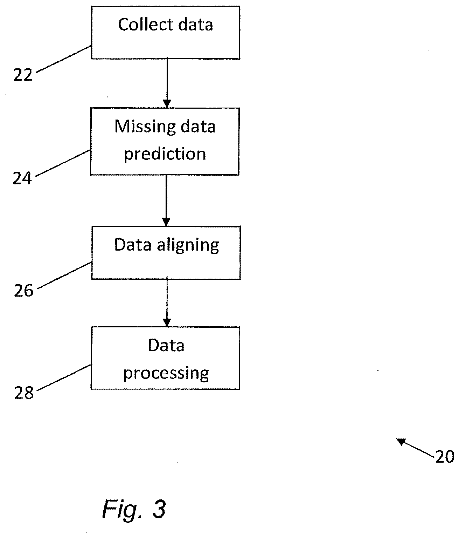

Figure 3 is a flow chart showing an algorithm, indicated generally by the reference numeral 20, in accordance with an exemplary embodiment.

The algorithm 20 starts at operation 22 where data is collected. As outlined above, the data may be collected from multiple data sources and multiple users. Further, the data collected in operation 22 may be in many different forms.

Typically, each data source used to collect data in the operation 22 only collects data when this is possible; for example when the user decides to wear their smartwatch, or sleeps in their smart - sensor instrumented - bed, or decides to step on their weight data collecting scales. These data collection opportunities are largely shaped by user behaviour and so will be sporadic. In order to provide data sets that are more similar, the algorithm 20, at operation 24, predicts some data points in a missing data prediction operation.

As described in detail below, different data can be provided in different forms; for example, in different quantities and different formats. Even data from different versions of the same sensor can be different. Again, this makes data comparisons difficult. Accordingly, the algorithm 20, at operation 26, aligns different data sets.

Finally, at operation 28, the data provided is processed in some way to provide an output (such as a prediction).

It should be noted that the operations of the algorithm 20 could be implemented in a different order to that shown in Figure 3. For example, data could be aligned (operation 26) before missing data is predicted (operation 24). Further, at least some of the operations could be separated into multiple sub-operations that might be implemented at different times or in different orders, where this is possible.

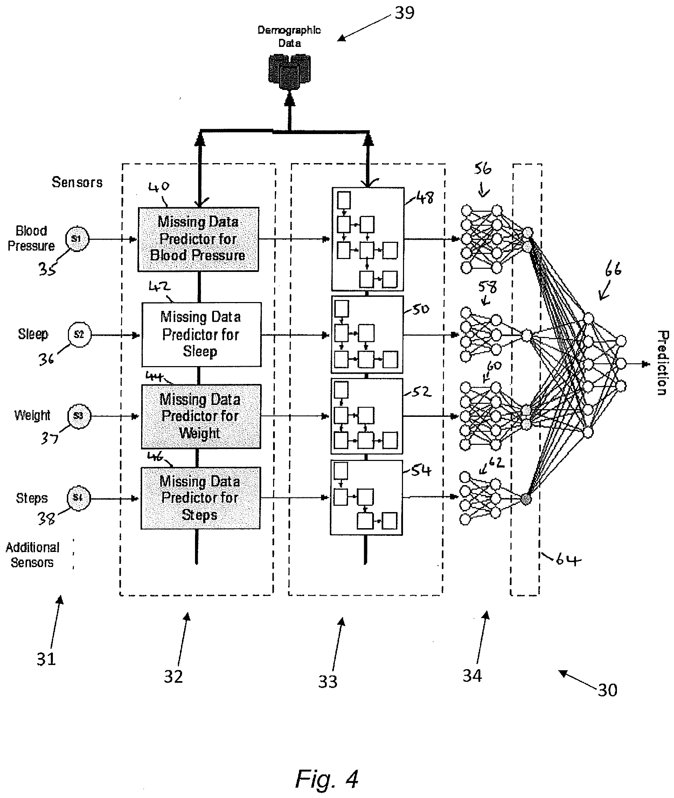

Figure 4 shows user behaviour monitoring system, indicated generally by the reference numeral 30, in accordance with an exemplary embodiment.

The system 20 is divided into four parts: a data collection part 31, a missing data predictor part 32, a data analysing part 33 and a data processing part 34. In one form of the invention, the system 30 implements the algorithm 20 such that data is collected by the data collection part 31 (operation 22), missing data is predicted by the missing data predictor part 32 (operation 24), data is aligned by the data analysing part 33 (operation 26) and data is processed by the data processing part 34 (operation 28).

The data collection part 31 includes a number of sensors. In the example of Figure 4, the system 30 includes a blood pressure sensor 35, a sleep sensor 36, a weight sensor 37 and a step counter 38. The sensors 35 to 38 are described by way of example. Some of those sensors might be omitted, and other sensors could readily be included. (Example embodiments including different combinations of sensors are discussed further below.)

In the exemplary system 30, the missing data predictor part 32 comprises a missing data predictor for blood pressure 40 (that receives data from the blood pressure sensor 35), a missing data predictor for sleep 42 (that receives data from the sleep sensor 36), a missing data predictor for weight 44 (that receives data from the weight sensor 37) and a missing data predictor for steps 46 (that receives data from the steps sensor 38).

The elements of the missing data predictor part 32 are all in communication with a demographic data module (indicated generally by the reference numeral 39). As described in detail below, the demographic data for many users may be used by the missing data predictors 40 to 46 in inferring data missing from the data provided by the sensors 35 to 38.

The missing data predictor part 32 seeks to address the sporadic data collection problem described above. This may be achieved by learning a predictive model for a specific sensor or a device type from which measurements are collected across a large number of users. The missing data predictor can take into account various correlations across sensing modalities and people belonging to a specific age-category, e.g., correlations between quality of sleep and weight changes. As described in detail below, the predictor models are built exploring multi-modal sensor data across a large variety of users taking into account demographic information such as age, gender, height or weight, and performs segmentation of available datasets to improve overall accuracies in predictions.

Inputs to the missing data prediction part 32 are: a sequence of sensor measurements pertaining to a user with missing data consisting of various lengths (holes); the user's demographic information; and data from a large number of users with various sensory measurements (stored in the demographic data module 39).

The outputs of the missing data predictor part 32 are passed to the inputs of the data analyzing part 33. The data analyzing part 33 seeks to convert the modified sensor outputs to representations having comparable data formats. Sensors, such as the exemplary sensors 35 to 38 provide data that differ significantly in terms of characteristics, range, sensitivity and data throughput. Given the heterogeneous natures of the sensors 35 to 38, providing a common data form is a non-trivial problem. As described in further below, this specification describes the use of a neural network (e.g. a long short-term memory (LSTM), which is popularly used as a sequence prediction model) to generate fixed length representations of individual sensor measurements.

Inputs to the data analysing part 33 are: outputs of the missing data predictor for all sensing modalities; the user's demographic information; and data from a large number of users with various sensory measurements.

The outputs of the data analyzing part 33 are passed to the inputs of the data processing part 34. The data processing part 34 uses neural network technology to draw conclusions or make predictions on the basis of the data obtained from the sensors 35 and 38 and processed by the missing data predictor part 32 and the data analyzing part 33.

The data processing part 34 typically comprises a multi-modal deep neural network (DNN). The network first learns sensor specific representation through a number of layers. To learn co-occurring features across sensing modalities, a number of layers may be shared on top of individual neural networks trained for all the sensing modalities. The sensor specific and shared layers of the multi-modal network may be trained following stacked de-noising auto-encoders in the pre-training phases. Finally, fine tuning of the entire network can be performed given the prediction task in hand. For example, the data processing part 34 may be configured to predict whether a user would achieve a specific weight objective. The output layer of this multi-modal-deep-neural-network may provide an output that presents the desired classification inference along with a confidence score.

As shown in Figure 4, the exemplary data processing part 34 includes a first neural network 56, a second neural network 58, a third neural network 60, a fourth neural network 62, bottleneck layers 64 and a network of neural network layers 66. Each of the neural networks 56 to 62 are modality specific networks. Thus, the first neural network 56 is provided for blood pressure data, the second neural network 58 is provided for sleep data, the third neural network 60 is provided for weight data and the fourth neural network 62 is provided for steps data.

The bottleneck layers 64 provide a neural network for each of the modality specific neural networks 56 to 62. The bottleneck layers 64 summarize the key aspects of the information distilled from earlier layers in the network in a condensed form ready to be shared and integrated with other modalities.

The network of layers 66 merges the modalities together layer by layer. In this way, the network of layers 66 blends data type differences, time scales etc. towards shared representations that map to the same concepts captured via these different signals into a single layer that contains nodes for each class. For example, the network of layers 66 may draw conclusions on the sleep data that combines evidence from other data forms such as those shown in Figure 4 and perhaps other data that is not shown (such as lack of motion, lack of light, snoring or silent sounds etc.).

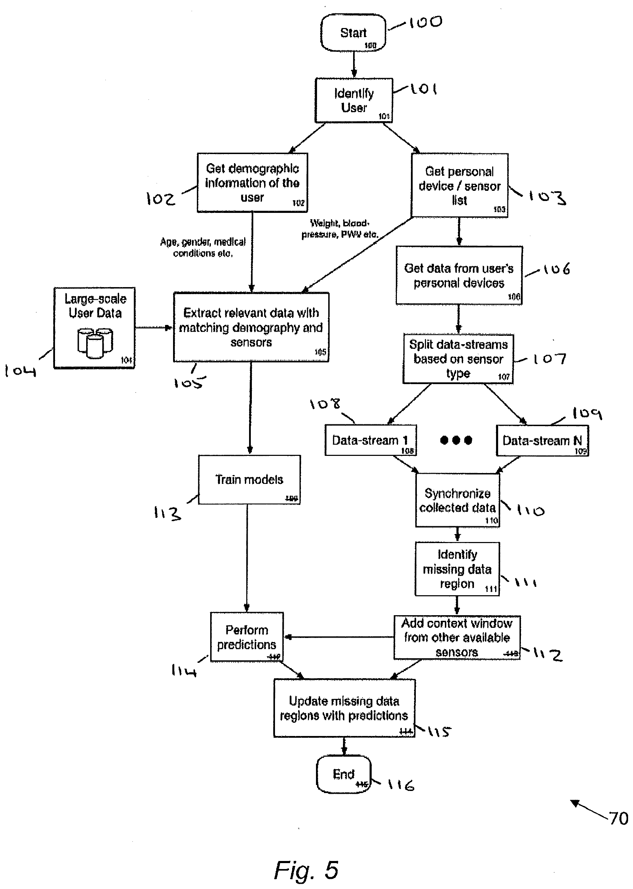

Figure 5 is a flow chart showing an algorithm, indicated general by the reference numeral 70, algorithm in accordance with an exemplary embodiment. The algorithm 70 may make use of some of the features of the system described above with reference to Figure 4.

The algorithm 70 starts at operation 100. Then, at operation 101, a user is identified and the user's demographic information extracted (at operation 102). The demographic data may include information such as age, weight and gender of the user. Of course, there are many examples of demographic data that could be used in addition to, or instead of, some of those mentioned above.

In parallel with operation 102, a list of the devices and sensors relevant to the user is generated in operation 103. The user's device/sensor list indicates the devices and sensors that are available to provide data regarding the user. Clearly, the devices and sensors could take many forms, such as a step counter, weight measurements, blood pressure monitors, a heart-beat monitor etc. The sensors 35 to 38 described above are examples of such sensors. With the sensors and devices identified, the algorithm moves to operation 106 starts to collect data from those devices and sensors.

As shown in Figure 5, the algorithm 70 makes use of large scale user data (see operation 104) that store demographic data, typically relating to a very large number of users. These data correspond to the demographic data 39 described above. In operation 105, the algorithm 70 makes use of the demographic data of the user (obtained in operation 102) and the user's device/sensor list (obtained in operation 103) to extract relevant data from the large scale user data 104. The operation 105 segments out data from the dataset 104 relating to the use of similar devices/sensors to those identified in operation 103 for users with similar demographic data to that identified in operation 102. For example, a population of people will own different combinations of devices (e.g. one person may own just a phone, another person may own a phone and a smartwatch). The operation 105 may, for example, segment from the large-scale user data 104 a group that shares these two core traits.

The data extracted from the dataset 104 is used to bootstrap predictor models. Thus, as shown in Figure 5, the algorithm 70 uses the extracted data to train multiple models (operation 113), for example using Gaussian Process Regression. Gaussian Process Regression considers heterogeneity in sampling frequency, variability and sensitivity. The hyper-parameters of the model are set following a model selection approach using a validation dataset to pick the best performing model. The validation dataset is generated from the segmented data obtained in operation (105). Types of heterogeneity mentioned here are with respect to different types of sensors. Different sensor types may, for example, have variation in sampling frequency and response sensitivity. These differences can be accounted for within the Gaussian Process Regression parameters.

As noted above, data is collected from the user's devices and sensors in operation 106. The collected data is split based on sensor types (operation 107). Thus, following the example system 30 described above, data relating to blood pressure, sleep, weight and steps may be separated. Once split, the data is collected into parallel data streams (data stream 1 (labelled 108) and data stream N (labelled 109) are shown in Figure 5 by way of example).

The data within the data streams 1 to N are synchronized (operation 110). Synchronizing the data simply brings data into time-alignment. Thus, data points that differ in time by trivial amounts may be given the same time stamp. This makes it easier to compare data within different data streams (as described further below).

The data within each data stream is considered in operation 111 to identify missing data in specific sensor measurements. Then, context information regarding the data is added in operation 112. For example, previous and later valid measurements obtained with the sensor (i.e. before and after the period in which data is missing) might be provided as context, as might data relating to other sensors within the relevant period.

In one simple example, identifying missing data samples may be implemented based on time-stamps. For example, time-stamp data may be used to identify that no samples have been received for a particular day.

The data stream and context information generated at operation 112 is provided to the model trained in operation 113 in order to generate predictions of the missing data (operation 114). Predicted data points (i.e. inferred data) are then added to the sensor data stream (operation 115). For example, consider an example in which a user owns a smartwatch. The smartwatch is used to record the number of steps taken by a user each day. Assume now that the user leaves the smartwatch at home one day so that no steps are recorded so that the dataset includes one day with zero steps recorded. Data for that day may be inferred in operation 114 and added to the sensor data stream in operation 115 to ensure that there is no missing data in the datastream.

The models may output confidence scores (probabilities) per predicted value, allowing, for example, only predictions with high confidence scores to be incorporated into the data streams.

The inferred data generated in the operation 114 considers data from many sensors of a similar type to the sensor of the user for which there is missing data. This includes sensors with different data formats. For example, in the event that user weight data includes missing data, the prediction carried out in operation 114 can be based on weight data obtained from any suitable weight sensors for the similar users identified in operation 105 on the basis of the user's demographic data.

The algorithm 70 ends at operation 116 with the output of a number of data streams relating to user data that includes inferred data.

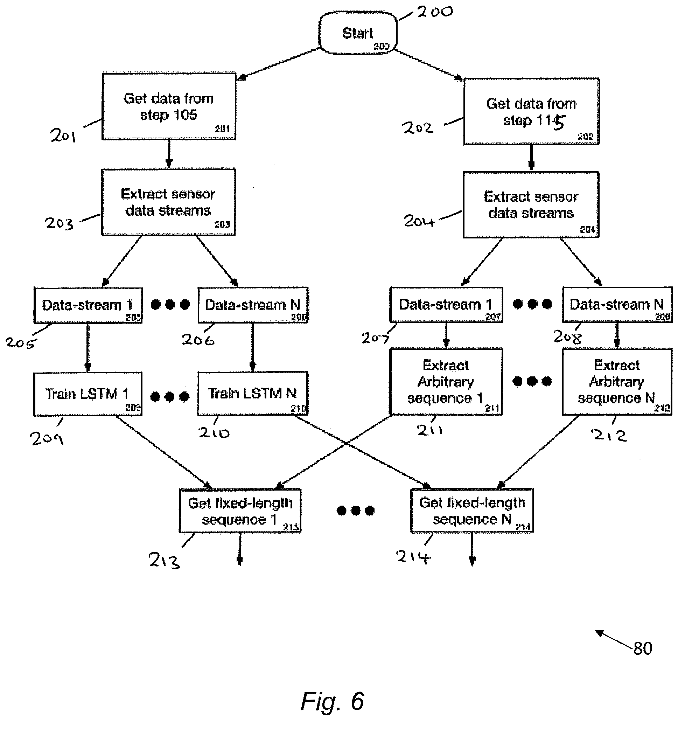

Figure 6 is a flow chart showing an algorithm, indicated general by the reference numeral 80, in accordance with an exemplary embodiment. The algorithm 80 may make use of some of the features of the system described above with reference to Figure 4.

As described above, the algorithm 70 mitigates at some of the problems with sporadic data availability problem. The algorithm 80 seeks to address the challenge of finding a uniform representation of measurements across heterogeneous sensors. As noted above, this is also a non-trivial problem as heterogeneous sensors vary significantly in terms of characteristics, range, sensitivity and data throughput. As described below, the algorithm 80 uses neural network technology to generate fixed length representations of individual sensor measurements.

The algorithm 80 starts at operation 200 and then moves, in parallel, to operation 201 and operation 202.

At operation 201, the algorithm 80 obtains data from the operation 105 described above. Similarly, at operation 202, the algorithm 80 obtains data from the operation 115 described above. Thus, at operation 201, the algorithm 80 receives the suitably segmented data from the dataset 104 and, at operation 202, the algorithm 80 receives a data stream included inferred data points.

For each of the user devices/sensors, a separate data stream is extracted (operation 204) for the data obtained in operation 115 described above. Each data stream is presented separately. In the example of Figure 6, data stream 1 (operation 207) and data stream N (operation 208) are extracted separately.

For the data types of data streams 1 to N, corresponding data from the user data obtained at operation 201 are extracted at operation 203. These data streams are then presented as data separate data streams. Thus, the large pool of data provides data stream 1 (operation 205) to data stream N (operation 206).

For each of the data streams of the large data set (such as data streams 205 and 206), a neural network is built and trained. In the example shown in Figure 6, a first LSTM 209 is provided for the first data stream 205 and an Nth LSTM 210 is provided for the nth data stream 206.

The neural networks (e.g. LSTM modules) 209 and 210 generate data representations for the data streams. A maximum allowed length of the input sequence for individual LSTMs is defined, specific to the sensors. Among various other factors, the maximum input sequence length is dependent on the sampling frequency and popularity of the sensor across users. Large dataset across many users helps us to optimize the LSTM architectures.

Suitable architectures of the LSTMs may be selected by applying a cross-validation technique. Individual LSTMs are then used to generate fixed length sequences for all the sensors (211)-(214). For example, variations of LSTM architectures may be tested one-by-one to see if the accuracy changes. The architecture with the best performance is then used. This is done in order to arrive at each individual LSTM that is mentioned here. Once that individual LSTM is determined, the LSTM may be used to generate data with a fixed length.

The fixed length sequences output at operations 213 and 214 of the algorithm 80 are provided as inputs to the data processing part 34. A wide variety of operations can be formed on these data by the deep neural networks that make up the data processing part 34. The effectiveness of the data processing part 34 may be aided by the completeness and comparability of the data being provided to the data processing part, since the data processing part 34 will then not have to function over data that is, for example, missing data samples.

By way of example, consider the use of the system 30 as a stress predicting application in which data is obtained from a small in-ear wearable device measuring the following data:
- blood flow information;
- blood pressure;
- audio from inside ear cavity and outside;
- temperature; and
- inertial data.

The five data streams can be provided as separate inputs to the missing data predictor part 32. Five Gaussian Process Models are trained (operation 113) on the data collected from a large number of users (for example obtained from demographic data 39) for the purpose of predicting missing data in each sensor modalities.

The outputs of the missing data predictor part 32 (operation 115) are provided to the data analysing part 33. For the specific sensors, the data analysing part using a LSTM model trained to generate sequences of fixed lengths.

Then, five neural networks (similar to the neural networks 56, 58, 60 and 62) are trained on data generated by the LSTMs and the outputs of all five neural networks are combined in modules 64 and 66 with shared layers to train the overall classifier.

Finally, the output of the model predicts the current stress level of the user using neural network technology.

Consider, next, the use of the system 30 as a weight-objective predictor in which data is obtained from the following data sources:
- a weight-scale measuring weight;
- a measurement of pulse wave velocity;
- a mobile application providing user activities data in terms of overall number of steps taken in a day; and
- an instrumented mattress measuring sleep quality.

The data is accumulated to periodically predict the probability that the user will achieve his/her weight objective, for example, losing or gaining of body weight within a defined time period.

The four data streams can be provided as separate inputs to the missing data predictor part 32. Four Gaussian Process Models are trained on data collected from a large number of users (for example obtained from the demographic data 39) for the purpose of predicting missing data in each sensor modalities, e.g., weight, steps etc.

The outputs of the missing data predictor part 32 are provided to the data analysing part 33. For the specific sensors, the data analysing part using a LSTM model trained to generate sequences of fixed lengths.

Then, four neural networks (similar to the neural networks 56, 58, 60 and 62) are trained on data generated by the LSTMs and the outputs of all four neural networks are combined in modules 64 and 66 with shared layers to train the overall classifier. Finally, the output of the model predicts the probability that the user will achieve his/her weight objective with next 30 days.

The skilled person will recognise that the two applications described above are provided by way of example only. The principles described in the present specification are applicable to many different applications.

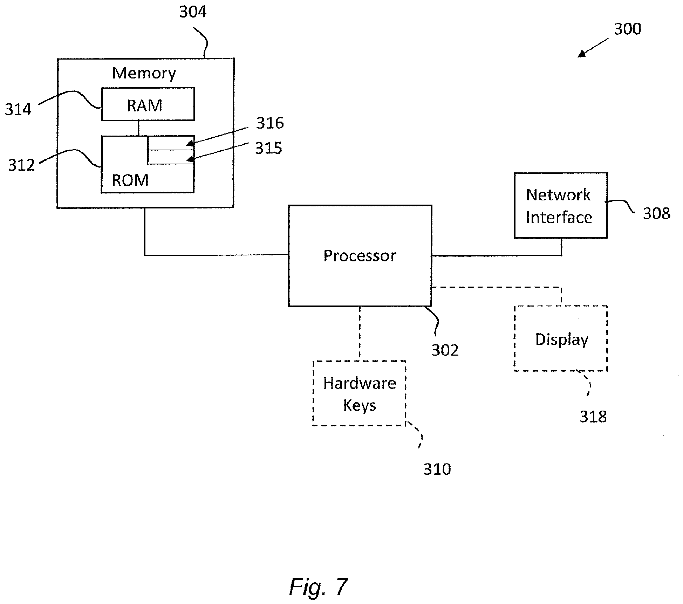

For completeness, Figure 7 is a schematic diagram of components of one or more of the modules described previously (e.g. implementing some or all of the operations of the algorithms 70 and 80 described above), which hereafter are referred to generically as processing systems 300. A processing system 300 may have a processor 302, a memory 304 closely coupled to the processor and comprised of a RAM 314 and ROM 312, and, optionally, hardware keys 310 and a display 318. The processing system 300 may comprise one or more network interfaces 308 for connection to a network, e.g. a modem which may be wired or wireless.

The processor 302 is connected to each of the other components in order to control operation thereof.

The memory 304 may comprise a non-volatile memory, such as a hard disk drive (HDD) or a solid state drive (SSD). The ROM 312 of the memory 314 stores, amongst other things, an operating system 315 and may store software applications 316. The RAM 314 of the memory 304 is used by the processor 302 for the temporary storage of data. The operating system 315 may contain code which, when executed by the processor implements aspects of the algorithms 70 and/or 80.

The processor 302 may take any suitable form. For instance, it may be a microcontroller, plural microcontrollers, a processor, or plural processors.

The processing system 300 may be a standalone computer, a server, a console, or a network thereof.

In some embodiments, the processing system 300 may also be associated with external software applications. These may be applications stored on a remote server device and may run partly or exclusively on the remote server device. These applications may be termed cloud-hosted applications. The processing system 300 may be in communication with the remote server device in order to utilize the software application stored there.

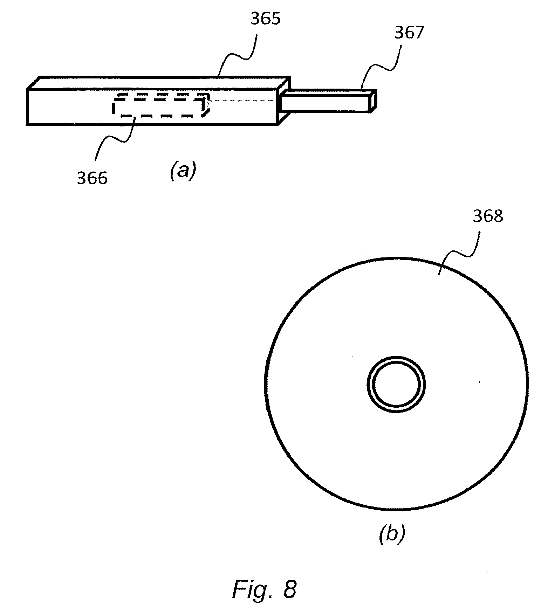

Figures 8a and 8b show tangible media, respectively a removable memory unit 365 and a compact disc (CD) 368, storing computer-readable code which when run by a computer may perform methods according to embodiments described above. The removable memory unit 365 may be a memory stick, e.g. a USB memory stick, having internal memory 366 storing the computer-readable code. The memory 366 may be accessed by a computer system via a connector 367. The CD 368 may be a CD-ROM or a DVD or similar. Other forms of tangible storage media may be used.

Embodiments of the present invention may be implemented in software, hardware, application logic or a combination of software, hardware and application logic. The software, application logic and/or hardware may reside on memory, or any computer media. In an example embodiment, the application logic, software or an instruction set is maintained on any one of various conventional computer-readable media. In the context of this document, a "memory" or "computer-readable medium" may be any non-transitory media or means that can contain, store, communicate, propagate or transport the instructions for use by or in connection with an instruction execution system, apparatus, or device; such as a computer.

Reference to, where relevant, "computer-readable storage medium", "computer program product", "tangibly embodied computer program" etc., or a "processor" or "processing circuitry" etc. should be understood to encompass not only computers having differing architectures such as single/multi-processor architectures and sequencers/parallel architectures, but also specialised circuits such as field programmable gate arrays FPGA, application specify circuits ASIC, signal processing devices and other devices. References to computer program, instructions, code etc. should be understood to express software for a programmable processor firmware such as the programmable content of a hardware device as instructions for a processor or configured or configuration settings for a fixed function device, gate array, programmable logic device, etc.

As used in this application, the term "circuitry" refers to all of the following: (a) hardware-only circuit implementations (such as implementations in only analogue and/or digital circuitry) and (b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a server, to perform various functions) and (c) to circuits, such as a microprocessor(s) or a portion of a microprocessor(s), that require software or firmware for operation, even if the software or firmware is not physically present.

If desired, the different functions discussed herein may be performed in a different order and/or concurrently with each other. Furthermore, if desired, one or more of the above-described functions may be optional or may be combined. Similarly, it will also be appreciated that the flow diagrams of Figures 5 and 6 are examples only and that various operations depicted therein may be omitted, reordered and/or combined.

It will be appreciated that the above described example embodiments are purely illustrative and are not limiting on the scope of the invention. Other variations and modifications will be apparent to persons skilled in the art upon reading the present specification.

Moreover, the disclosure of the present application should be understood to include any novel features or any novel combination of features either explicitly or implicitly disclosed herein or any generalization thereof and during the prosecution of the present application or of any application derived therefrom, new claims may be formulated to cover any such features and/or combination of such features.

Although various aspects of the invention are set out in the independent claims, other aspects of the invention comprise other combinations of features from the described embodiments and/or the dependent claims with the features of the independent claims, and not solely the combinations explicitly set out in the claims.

It is also noted herein that while the above describes various examples, these descriptions should not be viewed in a limiting sense. Rather, there are several variations and modifications which may be made without departing from the scope of the present invention as defined in the appended claims.

## Claims

1. A method comprising:
receiving first user data of a first user from a plurality of data sources;
inferring at least some missing data points in said first user data using one or more models to predict the missing data points, wherein the models are trained using selected data extracted from stored data relating to a plurality of users;
generating modified user data from said first user data and at least some of said inferred missing data points; and
converting said modified user data into a plurality of representations having defined length sequences for each data source.

2. A method as claimed in claim 1, wherein said selected data is selected in order to provide data from similar data sources to data sources that have missing data points.

3. A method as claimed in claim 1 or claim 2, wherein said selected data is selected to provide data from selected ones of the plurality of users that are similar to the first user.

4. A method as claimed in claim 3, wherein similar users are identified by comparing demographic data of the first user with demographic data of the plurality of users.

5. A method as claimed in any one of the preceding claims, wherein the one or more models used to predict the missing data points are multi-modal models.

6. A method as claimed in any one of the preceding claims, wherein the one or more models used to predict the missing data points are implemented using one or more neural networks.

7. A method as claimed in any one of the preceding claims, wherein converting said modified user data comprises extracting arbitrary data sequences from data sequences extracted from the modified user data and converting said arbitrary data sequences into representations having said defined length sequences for each data source.

8. A method as claimed in any one of the preceding claim, further comprising using a neural network for each data source to define the length of the defined length sequence for the respective data source.

9. A method as claimed in any one of the preceding claims, wherein the plurality of data sources includes one or more sensors.

10. A method as claimed in any one of the preceding claims, further comprising processing the converted modified user data having defined length sequences using a neural network.

11. A method as claimed in claim 10, further comprising processing the converted modified user data using the neural network to make predictions on the basis of said converted modified user data.

12. An apparatus configured to perform the method of any preceding claim.

13. Computer-readable instructions which, when executed by computing apparatus, cause the computing apparatus to perform a method according to any one of claims 1 to 11.

14. A computer-readable medium having computer-readable code stored thereon, the computer readable code, when executed by at least one processor, causes performance of:
receiving first user data of a first user from a plurality of data sources;
inferring at least some missing data points in said first user data using one or more models to predict the missing data points, wherein the models are trained using selected data extracted from stored data relating to a plurality of users;
generating modified user data from said first user data and at least some of said inferred missing data points; and
converting said modified user data into a plurality of representations having defined length sequences for each data source.

15. Apparatus comprising:
means for receiving first user data of a first user from a plurality of data sources;
means for inferring at least some missing data points in said first user data using one or more models to predict the missing data points, wherein the models are trained using selected data extracted from stored data relating to a plurality of users;
means for generating modified user data from said first user data and at least some of said inferred missing data points; and
means for converting said modified user data into a plurality of representations having defined length sequences for each data source.
